(19) Europäisches Patentamt
European Patent Office
Office européen des brevets

(11) EP 4 715 352 A1

(12) **EUROPEAN PATENT APPLICATION**

(43) Date of publication:
25.03.2026 Bulletin 2026/13

(51) International Patent Classification (IPC):
**G01K 3/04** (2006.01)     **G01K 7/16** (2006.01)
**G01N 21/64** (2006.01)

(21) Application number: 25204325.2

(22) Date of filing: 24.09.2025

(52) Cooperative Patent Classification (CPC):
**G01K 3/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **24.09.2024 IT 202400021276**

(71) Applicant: **Active Label S.r.l.**
**09100 Cagliari (CA) (IT)**

(72) Inventor: **RICCI, Pier Carlo**
**09126 Cagliari (CA) (IT)**

(74) Representative: **Primiceri, Maria Vittoria et al**
**Praxi Intellectual Property S.p.A.**
**Via Leonida Bissolati, 20**
**00187 Roma (IT)**

(54) **LABEL-SHAPED DEVICE BASED ON HETEROSTRUCTURES**

(57) The invention has as its object a label-shaped device that can be applied to an object to monitor the temperature trend of the object over time. The device comprises:
a support substrate;
a layer of active material applied to the support, said active material being suitable to provide an optically stimulated response in luminescence (OSL) linked to the temperature/time condition to which the object has been subjected in a given period of time, starting from a dose of electromagnetic radiation initially absorbed having an energy greater than a minimum dependent on the difference between energy levels of the molecular structure of said material active;
a layer of semiconductor material coupled to the layer of active material in such a way as to form a heterostructure with the layer of active material so that the luminescence response of the layer of active material is such as to induce a transfer of charges towards the semiconductor material and, therefore, a corresponding modification of the conductivity of the layer of semiconductor material.

Fig. 2

**Description**

The present invention concerns techniques for detecting temperature variations that may affect sensitive materials, particularly during storage and transport operations. In particular, it refers to a labeled device designed to be applied to an object in order to monitor the temperature variation of the object itself over time, as well as the related monitoring process.

There is a growing need to monitor the temperature of easily perishable items, such as food or medicines, over time, especially when they are packaged for transport and storage. Every day, millions of crates of food products are distributed to supermarkets, restaurants, hospitals, universities and other food service facilities. The efficient and safe transport of these products from the producer to the consumer requires a complex, highly connected and coordinated distribution network. Distributors act as intermediaries between producers and food service operators and/or consumers, transporting and delivering large quantities of products, crates and individual units.

Although the supply chain is rarely considered in the assessment of safety conditions, the measures taken by distributors are just as crucial as the Hazard Analysis and Critical Control Point (HACCP) planned by the supplier or the correct preparation of products by the manufacturer.

Worldwide, food production is sufficient to meet the needs of billions of people, but a third or more of the food produced each year is lost or wasted. This waste also has a significant impact on the environment: it is estimated that the $CO_2$ emission linked to wasted food represents 3.3 billion tons. If food waste were considered a geographical region, it would be the third largest producer of greenhouse gases, after China and the USA.

Controlling the cold chain through the various stages of food production and distribution is essential to properly store food and reduce waste. In addition, the ability to economically and environmentally sustainably control the cold chain increases safety for producers and consumers and can benefit the market (according to the formula more control + more safety = more trust and more market).

There are already various devices for controlling the temperature of objects, based on different physical/chemical effects activated at fixed temperatures, which have various disadvantages:

- Magnetic labels, which result in the irreversible loss of magnetic properties;
- Organic labels, which involve irreversible variations in color;
- Shape labels, which result in irreversible changes in shape memory compounds.

Most of the solutions currently available are based on visible and irreversible chemical/physical processes linked to a predetermined temperature. Supply chain operators are generally sceptical of the large-scale use of these temperature/time indicators because of the speed of the irreversible response once the threshold temperature is exceeded. In fact, an accidental exposure, even brief, to high temperatures (for instance, when the package is touched by the consumer) activates the irreversible process on which the current time/temperature indicators (TTI - Time Temperature Indicators) are based.

The main purpose of this invention is to provide a label-shaped device, designed to be applied to an object, which allows the variation in the temperature of the object itself to be monitored over time, and a procedure for such monitoring, in order to overcome all the previously mentioned drawbacks.

The invention achieves its purpose with a label-shaped device that can be applied to an object to monitor the temperature trend of the object over time. The device comprises:

a support substrate;
a layer of active material A applied to the support, said active material being suitable to provide an optically stimulated luminescence (OSL) response linked to the temperature/time condition to which the object has been subjected in a given period of time, starting from a dose of electromagnetic radiation initially absorbed having an energy greater than a minimum dependent on the difference between energy levels of the molecular structure of said material active;
a layer of semiconductor material B coupled to the layer of active material in such a way as to form a heterostructure with the layer of active material so that the luminescence response of the layer of active material is such as to induce a transfer of charges towards the semiconductor material and, therefore, a corresponding modification of the conductivity of the layer of semiconductor material.

Material A is typically formed by crystalline oxides, such as, for instance, $Ba_2SiO_4$ or $SrAl_2O_4$ while material B is typically formed by semiconductor material such as, for instance, $ZnO$, $TiO_2$.

These materials are advantageously bonded together by thermal synthesis to form a crystalline compound with energy levels in contact with each other.

This device is able to monitor the temperature trend of the object over time by measuring the electrical conductivity of semiconductor material B, whose value increases thanks to the transfer of photoexcited charges from material A to material B.

It is also object of the present invention a procedure for monitoring the temperature trend of an object over time, using that device.

A particular object of this invention is a procedure for monitoring the temperature as a function of the time elapsed from an activation time 0 of the label, as better described in the claims, which form an integral part of the present description.

Compared to the device described in the EP 3580538 document that uses optically stimulated luminescence to estimate the temperature of a material, the presence of two materials that form a heterostructure has the substantial advantage of being able to divide the energy conservation material (Material A, highly defective) with material B with high conductivity and low defectivity.

Furthermore, the use of electric current measurements instead of optical measurements does not require the presence of dopants in the matrices (which in the case of EP patent 3580538 are fundamental points, representing areas of recombination by radiation). The possibility of re-entrapment by the charges can lead to a variation of the analytical model with respect to the optically stimulated luminescence value obtained on different materials.

Further features and improvements are an object of the dependent claims.

The characteristics of the invention and the advantages deriving from it will be more evident from the following detailed description of the attached figures, wherein:

Fig. 1 shows a side view of the label device according to an embodiment of the invention.

Fig. 2 shows the device in the previous figure mounted on a support substrate.

Fig. 3 shows a flat band diagram of the energy levels of the active material and the representation of the three steps of the process. The arrows indicate the passage of the charges through the various states of the process: (a) excitation by high-energy light (UV) of the material A and trapping of the charges in the lattice defects; (b) low-energy photoexcitation of trapped charges; (c) transfer of charges from material A to the conduction band of material B for temperature/time reading.

Fig. 4 shows an example of the optically induced current trend in material B.

Fig. 5 shows the flow diagram of a procedure according to an embodiment of the invention.

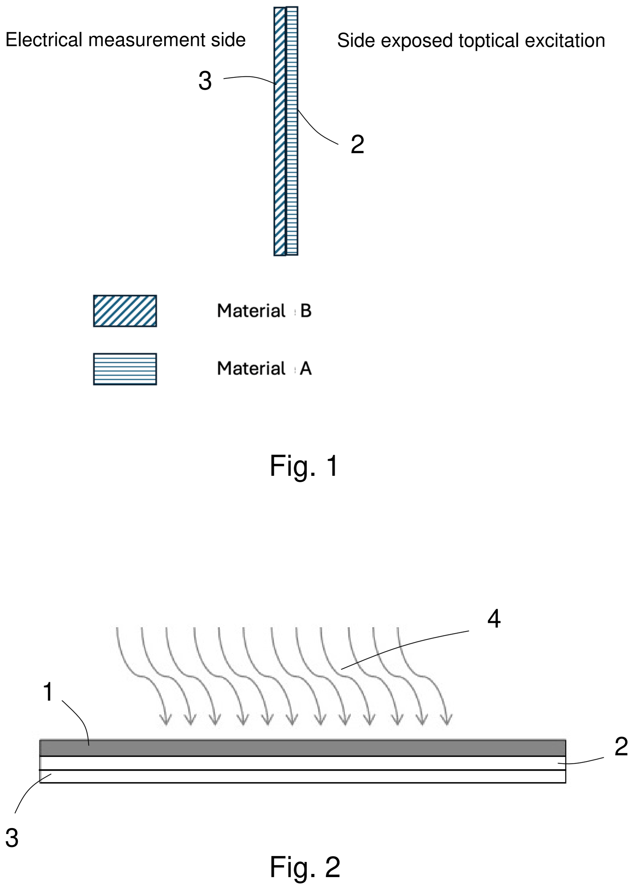

As shown in Fig. 1, a device according to an embodiment of the invention comprises a heterostructure of two materials:

a first optically active material A is formed, for instance, by a wide-gap crystalline oxide characterized by structural defectiveness at various depths and, optionally, with substitutional dopant elements.

a second material B formed, for instance, by a semiconductor crystal system.

The two materials are chosen in such a way that the conduction band of material A is at a higher energy level than the conduction band of material B. This favours the transfer of photoexcited charges from material A to material B, thus increasing the conductivity of material B.

The object whose temperature trend over time is to be measured, can be for instance a container (package) inside which delicate material is placed.

As shown in Fig. 2, the label is typically cuboid shaped and comprises a support substrate 1, a layer of active material 2 applied to the substrate, and a layer of semiconductor material 3 coupled to active material 2.

The substrate materials can be of different types, for instance:

- Flexible plastic (e.g. PET, Polystyrene, cellophane, etc.);
- Paper;
- Thin metallic (e.g. aluminium paper).

The substrate can be applied with adhesive to the object, or it can be part of the object to be monitored, for instance part of the container.

The layer of active material can be applied to the substrate with an adhesive or binder.

The label records temperature/time information thanks to the structural/optical properties of the active material of which it is composed.

Active material A may comprise crystalline oxides, such as $Ba_2SiO_4$, solid solutions of oxyorthosilicates and/or barium halide salts.

Specifically, the active material with the relative dopant agents can be selected from the group which consists of: $Ca_3Ga_4O_9$:, $SrAl_2O_4$:, $Ba_2SiO_4$:, $Sr_3SiO_5$:, $BaSi_2O_5$:, $Na_2SiO_4$:, $Sr_3Al_2O_5Cl_2$:, $CaAl_2O_4$:Eu:, $(Sr1-xBax)Si_2O_2N_2$:, $SrGa_2O_4$:, $LiScGeO_4$:, $BaGa_2O_4$:, $Ba1-xCaxS$:, $LiGa_5O_8$:.

Semiconductor material B can comprise ZnO or $TiO_2.SnO_2$, CuO, $Cu_2O$, $Nb_2O_5$, Si, $Fe_2O_3$, WS2, WO3, $MoS_2$, $ZrO_2$, $HfO_2$

The two materials that form the heterostructure are advantageously linked together by thermal synthesis so as to form a crystalline compound with energy levels in contact with each other.

The operation of an executive embodiment of the device is described below.

First step (Band-to-band excitation)

System A is excited with UV radiation, generating charges that can fill the structural defects in material A. The time at which this process takes place is defined as time 0 and preferably must take place at the ideal storage temperature of the label/product or at a defined temperature.

Second step (Intragap photoexcitation)

Subsequent photoexcitation with intragap energy stimulates the trapped charges, bringing them into the conduction band of material A, from where they are transferred to material B. This process takes place at the final time T and represents a fundamental point for the following step relating to the measurement of the photocurrent produced on material B.

Third step (Conductivity measurement)

The reading of temperature and time conditions is based on the measurement of the conductivity of material B, which increases in the presence of an excess of charges in the conduction band transferred from material A.

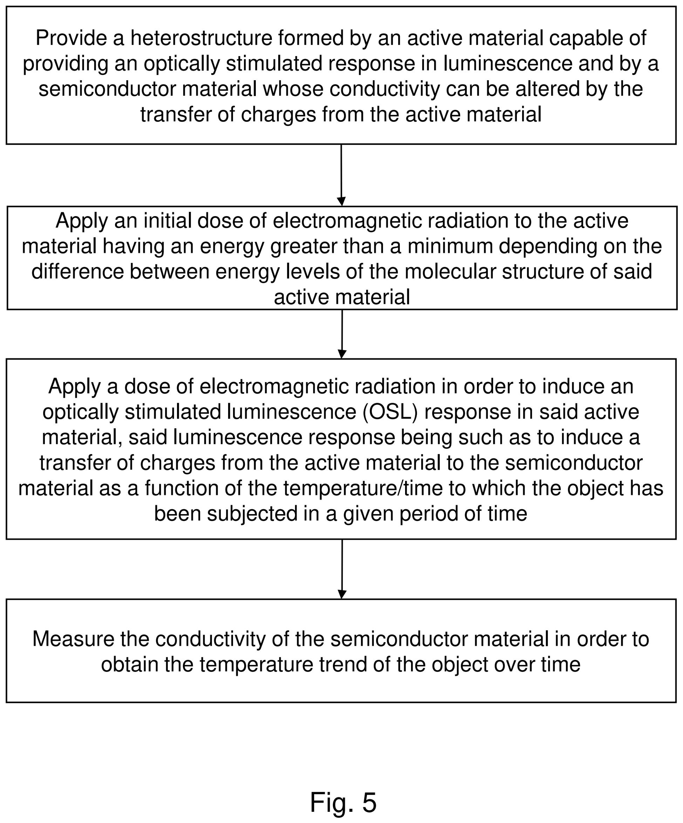

The flow chart shown in Fig. 5 summarizes these steps.

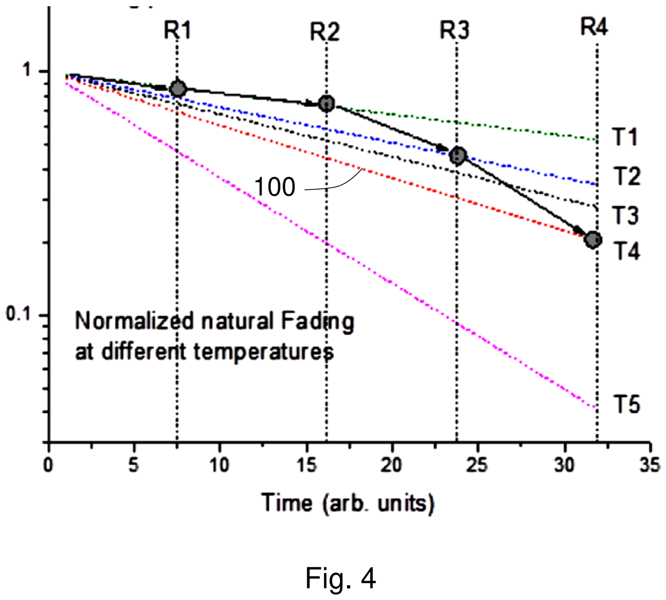

The idea behind the invention consists in using in an inverse way the concept, the experimental technique and the analysis method of optically stimulated luminescence (OSL), typically used in the field of dosimetry. In fact, starting from the radiation dose absorbed during the execution of a writing or loading procedure described below and measuring the response in OSL after a fixed time interval, it is possible to estimate the average temperature of the product. The graph shown in Fig. 4 shows how it is possible to calculate the average temperature of an object (in the figure in four successive steps R1 - R4 in time t on the abscissa, and in a normalized intensity value) once the amount of energy stored in the material during loading or writing is known, corresponding to a step of activation of the label and the natural fading of the material the indicator is made of. In a similar way, once the temperature has been fixed, it is possible to calculate the time elapsed by the writing procedure. By appropriately selecting the time interval between successive readings, it is possible to precisely monitor the actual storage temperature of the products placed in the containers.

It is possible to determine the complete history of the product and the exact temperature at which it has been stored, identifying in which time interval the temperature has changed. Knowledge of the complete history of the product makes it possible to accurately predict the degradation of food as a result, for instance, of the development of bacteria. In patent EP3580528, to be considered an integral part of this description, it has been verified that by optically stimulated luminescence it is possible to calculate the temperature at which a material has been obtained. In fact, if the number of carriers trapped in the reticular defects and the time for which these carriers have been preserved are known, the material can be photostimulated with enough energy as to empty the trapping centers and, if the material has an optical recombination center, obtain from the intensity of optically stimulated luminescence a value proportional to the carriers still trapped and, then, to trace the temperature by means of a mathematical relationship. In the present invention, instead of measuring luminescence, the conductivity of a material B coupled to the optically active material B is measured to form a heterostructure that receives the optically stimulated charges in the active material A. As a first approximation, it can be assumed that there is a direct proportionality between the charges transferred to the semiconductor material B and the optical response that the material A would have in the absence of the heterostructure. More precise relationships can be determined empirically depending on the materials used.

In the following, further information is given regarding the physical phenomena underlying the process of natural emptying of the traps (natural fading) in active material A.

The probability P(T) is given by the following relation:

$$P(T) = s \cdot exp\ (-\Delta E/\kappa T) \qquad (1)$$

wherein:

- k is Boltzmann's constant ($8.617 \times 10^{-5}$ eV $K^{-1}$),

- T is the absolute temperature (in degrees Kelvin)

- s is the frequency factor, which represents the number of times per second that the electron tries to escape from the trap (order of magnitude: $10^{10}$ - $10^{12}$ s$^{-1}$).

It can be seen that the probability of releasing charges from the traps increases exponentially with temperature. Therefore, knowing this curve, it will be possible to trace the effective time/temperature combination of the crystal of which the active material A of the device is composed.

In the present invention, the characteristics of time and temperature are determined by reading the photo-induced current in material B that received the charges released from the traps of material A, giving precise information on the conditions (time and temperature) of storage.

In addition to a beam of electromagnetic radiation that acts to write and initialize material A, a second beam is needed for the optical excitation of the trapped carriers and an efficient transfer of the carriers released in the conduction band from material A to material B (on which the photocurrent induced by this charge transfer will be studied).

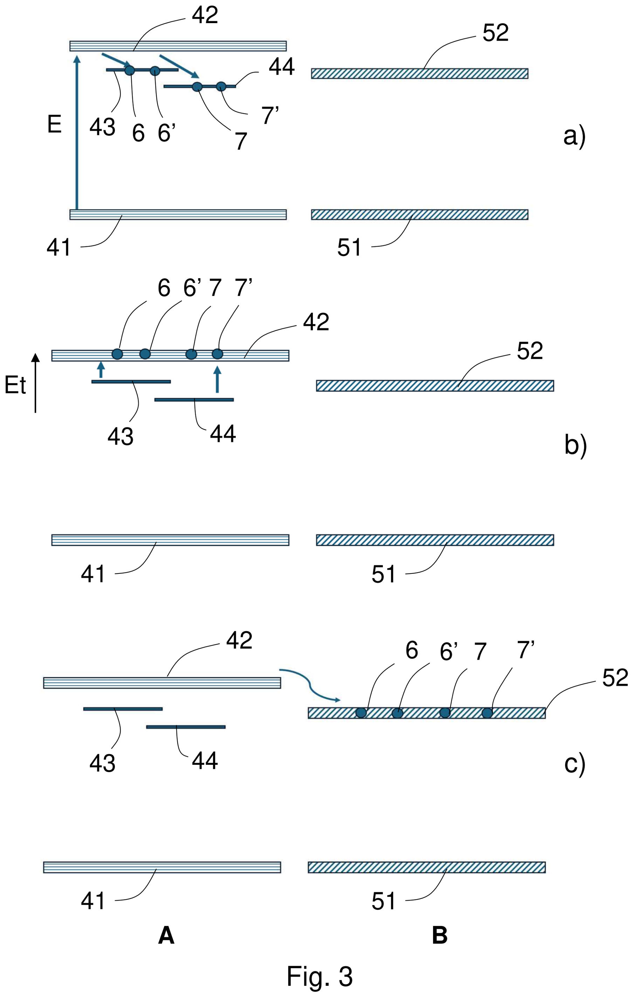

Fig. 3 shows a flat band diagram of the energy levels of materials A and B of the heterostructure in the three process steps. The arrows indicate the passage of the charges:

(a) excitation by high-energy light E (e.g. UV) of material A and entrapment of charges in lattice defects 43, 44;
(b) low-energy photoexcitation of trapped charges;
(c) transfer of charges from material A to the conduction band of material B.

The step a) is the so-called writing step in which free charge carriers 6, 6', 7, 7' are created in conduction band 42 of the active material A. In particular, any ray incident on active material A with photons of energy E greater than the energy between valence band 41 and conduction band 42 of active material A, for instance about 6.2 eV at room temperature, will act as a "writer". The charge carriers will subsequently be trapped in deep defects (engraved information) of material A, in particular in lattice defects 43, 44. These defects are due to impurities, typically near conduction band 42, or defects related to the growth process of material A. It is also possible to plan to dope material A in order to create additional radiative recombination channels wherein to trap the charges that decay from conduction band 42.

As shown in Fig. 3b, the charge carriers 6, 6', 7, 7' trapped in deep defects 43, 44 are brought back in conduction band 42 of material A providing the system with energy Et equal to the depth of the trapping defect, within the band gap with respect to conduction band 42 of the matrix.

In the third step shown in Fig. 3c, the carriers transfer to conduction band 52 of material B (formation of a heterostructure) with a consequent increase in the current in material B whose reading provides the desired information.

The optical depth of the trapping defects 43, 44 coincides, therefore, with the energy Et necessary to free the trapped charge carriers 6, 6', 7, 7'. A beam of light of such energy focused on the device will be able to verify whether it had been excited with energies capable of "writing" to the device and thus "reading" the information previously stored in the device.

It should be noted that the device is reusable, as after a "reading" process, further described below, it will be possible to perform a subsequent "writing" step, as described above, thus preparing the device for new use.

The processes of "reading" the previously stored data exploit the same principle of emptying the traps of the charge carriers and the subsequent recombination in the luminescent centers.

The $I_{fot}$ intensity of the current measured on material B after light re-excitation (of material A) will be defined as:

$$I_{fot} = -\eta \; dm/dt \tag{2}$$

wherein $\eta$ is the luminous efficiency, i.e. a parameter between 0 and 1, and m is the concentration of trapping defects. If we assume that the material A is in quasi-equilibrium conditions, i.e. that there are no unbound electrons in the conduction band and that there is therefore charge balancing, we can assume that dm/dt = dn/dt wherein n will indicate the concentration of trapped electrons. Hence, assuming $\eta=1$:

$$I_{fot} = - \; dn/dt \tag{3}$$

Assuming that the recombinations of the photoexcited electrons take place in the luminescent center and that therefore there are no re-trapping effects, we can write:

$$I_{fot} = n\phi(\lambda)\sigma(\lambda) \tag{4}$$

wherein $\phi(\lambda)$ indicates the optical excitation density of photostimulation and $\sigma(\lambda)$ is the photoionization cross-section. Differentiating (4) and combining with (3) gives:

$$\sigma(\lambda)= 1/\phi(\lambda)\ (dI_{fot,t}/dt)\ (dt/dn) = 1/\phi(\lambda)\ (dI_{fot,t}/dt)\ (1/I_{fot,t}) \quad (5)$$

from which it is possible to predict an exponential trend of the photoinduced carriers in the conduction band of material A and transferred to material B 1 which is also a function of the intensity of the incident beam and the cross section:

$$I_{fot,t}= I_{fot,0}\cdot \exp\ (-t/\phi(\lambda)\sigma(\lambda)) \hspace{4cm} (5)$$

From the above, it can be seen that the product $\sigma(\lambda)\phi(\lambda)$ can be seen as the average lifetime of photoionization. This model, as has been said, is valid if we consider only one type of trapping centers. If there are more types of traps then with a similar reasoning we will obtain a sum of exponentials, which will contribute independently to the cross-section and therefore the total value will be given by a weighted average of all the values found for the different types of traps.

As already indicated and shown in Fig. 4, by reporting, therefore, in a semi-logarithmic graph with in abscissa the time and in ordinate the obtained value of the photoconductivity of material B (obtained by photoexcitation of the traps contained in material A), a straight line will be obtained for each maintenance temperature of the device, whose angular coefficient will be linked to the product $\sigma(\lambda)\phi(\lambda)$. In the case of holding at several temperatures for different times, from a single reading (line 100 in figure 4), a weighed line will be obtained, linked to an effective temperature.

The measurement of the induced current in material B or, equivalently, the conductivity of material B can be carried out by means of known amperometric methods. It is, for instance, possible to provide that material B has a pair of spaced metal pads on which the tips of an ohmmeter can be positioned for the measurement of the electrical resistance of material B. This measurement can be manual as well as carried out automatically, for instance, by a robotic arm while the product flows on a conveyor belt.

The measurement of the average storage temperature can be advantageously used to verify bacterial proliferation within a poorly stored product.

Bacterial proliferation over time follows, in fact, a trend related to temperature wherein the mathematical function used to describe bacterial growth is characterized by a latency phase, an exponential growth phase, a decelerating phase and finally a stationary phase. Analytically it can be represented according to a Gompertz curve:

$$N(\tau)=A+C\cdot \exp\ (-\exp\ (-B(T)\cdot(\tau-M(T))\ \log_{10}(cfu/g) \hspace{2cm} (6)$$

wherein:

N($\tau$) is the microbiological count of a product $\tau$ days ago and maintained at temperature T (in °C).
A, C are product-specific parameters.
cfu/g is the number of bacteria per gram
B(T), M(T) are temperature-dependent parameters defined as:

$$B(T)=\alpha_B\cdot \exp\ (\beta_B\cdot T)$$

$$M(T)=\alpha_M\cdot \exp\ (\beta_M\cdot T)$$

wherein $\alpha_B$, $\beta_B$, $\alpha_M$, $\beta_M$ indicate product-specific constants.

Therefore, to correlate bacterial growth as a function of temperature, when a good is kept at different temperatures for non-homogeneous times, an effective temperature can be obtained from the induced photoconductivity measurements as a value to be comprised in the Gompertz equation.

So, to find bacterial growth in a product you can do the following:

1. Measure the intensity of the $I_{cond}$ current in material B.
2. Determine the corresponding effective temperature T.
3. Enter the temperature T in the parameters B(T) and M(T) to calculate the microbiological count N($\tau$).
4. Check whether N($\tau$) is below the safe threshold to determine the quality of the product.

**Claims**

1. A device configured as a label and suitable to be applied to an object to monitor the temperature of the object over time, the device comprising:

   - a support substrate (1);
   - an active material layer (2) applied to the support substrate, said active material being suitable to provide an optically stimulated luminescence (OSL) response related to the temperature/time condition to which the object has been subjected over a determined period, based on an initially absorbed electromagnetic radiation dose with energy greater than a minimum dependent on the difference between energy levels of the molecular structure of said active material,

   **characterized by** comprising a semiconductor material layer (3) coupled to the active material layer (2) so as to form a heterostructure with the active material layer (2), such that the luminescence response of the active material layer (2) induces a charge transfer to the semiconductor material, and thus a corresponding modification of the conductivity of the semiconductor material layer (3).

2. The device according to claim 1, wherein said active material (2) is **characterized by** presenting structural defects (43, 44) at various depths and, optionally, with substitutional dopant elements.

3. The device according to claim 1 or 2, wherein the active material (2) and the semiconductor material (3) are chosen such that the conduction band (42) of the active material (2) is at a higher energy level than the conduction band (52) of the semiconductor material (3) to facilitate the transfer of photoexcited charges (6, 6', 7, 7') from the active material (2) to the semiconductor material (3).

4. The device according to one or more of the preceding claims, wherein said active material (2) comprises crystalline oxides, such as $Ba_2SiO_4$, solid solutions of oxyorthosilicates and/or barium halide salts, doped with rare earth elements and/or transition metals.

5. The device according to one or more of the preceding claims, wherein the active material (2) with its dopants is selected from the group consisting of: $Ca_3Ga_4O_9$:, $SrAl_2O_4$:, $Ba_2SiO_4$:, $Sr_3SiO_5$:, $BaSi_2O_5$:, $Na_2SiO_4$:, $Sr_3Al_2O_5Cl_2$:, $CaAl_2O_4$:Eu:, $(Sr1-xBax)Si_2O_2N_2$:, $SrGa_2O_4$:, $LiScGeO_4$:, $BaGa_2O_4$:Ba1-xCaxS:, $LiGa_5O_8$:.

6. The device according to one or more of the preceding claims, wherein the semiconductor material (3) comprises ZnO or $TiO_2$. $SnO_2$, CuO, $Cu_2O$, $Nb_2O_5$, Si, $Fe_2O_3$,WS2,WO3, $MoS_2$, $ZrO_2$, $HfO_2$

7. The device according to one or more of the preceding claims, wherein the materials (2, 3) forming the heterostructure are bonded together by thermal synthesis creating a crystalline compound in which the energy levels of the two materials are sufficiently aligned to enable efficient charge transfer between them.

8. The device according to one or more of the preceding claims, wherein the support substrate (1) comprises a material selected from the group consisting of: flexible plastic such as PET, polystyrene, cellophane, paper, thin metallic materials such as aluminium foil.

9. A method for monitoring the temperature of an object over time using a device according to any one of the preceding claims, **characterized by** comprising:

   a) applying an initial dose of electromagnetic radiation (E) to the active material (2) with energy greater than a minimum energy level dependent on the difference between energy levels of the molecular structure of said active material (2);
   b) applying a dose of electromagnetic radiation (Et) to induce an optically stimulated luminescence (OSL) response in said active material (2), the luminescence response inducing a charge transfer (6, 6', 7, 7') from the active material (2) to the semiconductor material (3) as a function of the temperature/time to which the object has been subjected over a determined period;
   c) measuring the conductivity of the semiconductor material (3) or the current induced in said semiconductor material (3) to obtain the temperature trend over time of the object.

10. The method according to claim 9, wherein step a) comprises exciting the active material with UV radiation to generate charges (6, 6', 7, 7') that at least partially fill the structural defects (43, 44) in the active material (2).

11. The method according to claim 10, wherein step a) occurs at time $t_0$ and at the ideal storage temperature of the product or at a defined temperature.

12. The method according to one or more of claims 9 to 11, wherein step b) comprises photoexcitation with intragap energy (Et) that stimulates the charges (6, 6', 7, 7') trapped in the structural defects (43, 44) in the active material (2), bringing them into the conduction band (42) of the active material (2) to be subsequently transferred into the semiconductor material (3).

13. The method according to one or more of claims 9 to 12, wherein step c) comprises measuring the change in conductivity of the semiconductor material (3) compared to an unexcited initial state caused by the excess charges in the conduction band (52) transferred from the active material (2).

14. The method according to one or more of claims 9 to 13, wherein it comprises the step of determining the average storage temperature T and using said temperature value to calculate the bacterial load of a product using the formula:

$$N(\tau)=A+C\cdot\exp\left(-\exp\left(-B(T)\cdot(\tau-M(T))\right)\log_{10}(cfu/g)\right.$$

wherein:

N($\tau$) is the microbiological count of a product $\tau$ days ago and stored at temperature T (in °C),
A, C are product-specific parameters;
Cfu/g indicates the number of bacteria per gram;
B(T), M(T): are temperature-dependent parameters defined as:

$$B(T)=\alpha_B\cdot\exp\left(\beta_B\cdot T\right)$$

$$M(T)=\alpha_M\cdot\exp\left(\beta_M\cdot T\right)$$

with $\alpha_B$, $\beta_B$, $\alpha_M$, $\beta_M$ indicating product-specific constants.

15. The method according to claim 14, wherein it comprises the step of verifying whether N($\tau$) is below a product safety threshold.

EP 4 715 352 A1

Electrical measurement side        Side exposed toptical excitation

3

2

Material : B

Material : A

Fig. 1

4

1

2

3

Fig. 2

9

Fig. 3

Fig. 4

Provide a heterostructure formed by an active material capable of providing an optically stimulated response in luminescence and by a semiconductor material whose conductivity can be altered by the transfer of charges from the active material

↓

Apply an initial dose of electromagnetic radiation to the active material having an energy greater than a minimum depending on the difference between energy levels of the molecular structure of said active material

↓

Apply a dose of electromagnetic radiation in order to induce an optically stimulated luminescence (OSL) response in said active material, said luminescence response being such as to induce a transfer of charges from the active material to the semiconductor material as a function of the temperature/time to which the object has been subjected in a given period of time

↓

Measure the conductivity of the semiconductor material in order to obtain the temperature trend of the object over time

Fig. 5

Europäisches
Patentamt

European
Patent Office

Office européen
des brevets

# EUROPEAN SEARCH REPORT

**Application Number**

**EP 25 20 4325**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2018/146606 A1 (UNIV DEGLI STUDI CAGLIARI [IT]) 16 August 2018 (2018-08-16) * abstract * * figures 1-6 * * pages 4-13 * ----- | 1-15 | INV. G01K3/04 G01K7/16 G01N21/64 |
| A | US 2010/074297 A1 (LAWLESS JOHN L [US] ET AL) 25 March 2010 (2010-03-25) * abstract * * figures 1-4 * * paragraphs [0039] - [0055] * ----- | 1-15 | |

**TECHNICAL FIELDS SEARCHED (IPC)**

G01N
G01K

The present search report has been drawn up for all claims

| Place of search | Date of completion of the search | Examiner |
|---|---|---|
| The Hague | 19 December 2025 | Totò, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 715 352 A1**

## ANNEX TO THE EUROPEAN SEARCH REPORT
## ON EUROPEAN PATENT APPLICATION NO.

EP 25 20 4325

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2025

| Patent document cited in search report | Publication date | Patent family member(s) | Publication date |
|---|---|---|---|
| WO 2018146606 A1 | 16-08-2018 | CN 110291371 A<br>EP 3580538 A1<br>WO 2018146606 A1 | 27-09-2019<br>18-12-2019<br>16-08-2018 |
| US 2010074297 A1 | 25-03-2010 | NONE | |

EPO FORM P0459

For more details about this annex : see Official Journal of the European Patent Office, No. 12/82

**EP 4 715 352 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3580538 A

- EP 3580528 A